# EUROPEAN PATENT APPLICATION

(11) **EP 4 752 749 A1**
(43) Date of publication of application: **03.06.2026**
(21) Application number: 24799906.3
(22) Date of filing: 26.06.2024
(51) Int. Cl.: G06F 16/33

(54) **PHOTOVOLTAIC POWER STATION LAUNCHING METHOD AND APPARATUS, AND STORAGE MEDIUM AND DEVICE**

(30) Priority: 29.04.2024 CN 202410536650; 29.04.2024 CN 202410536850
(71) Applicant: Shanghai Sigeyuan Intelligent Technology Co., Ltd., Shanghai 200000 (CN)
(72) Inventor: PAN, Fanghong, Shanghai 200000 (CN); WU, Yanchang, Shanghai 200000 (CN); JIANG, Chao, Shanghai 200000 (CN); LU, Wang, Shanghai 200000 (CN)
(74) Representative: Bayramoglu et al.
(86) International application number: PCT/CN2024/101760
(87) International publication number: WO 2024/227450

(57) **Abstract**

Provided are a start-up method and apparatus for a photovoltaic (PV) power station, a storage medium, and a device, which relate to the technical field of PV. The start-up method for a PV power station includes: S1: inputting a start-up instruction for the PV power station; S2: preprocessing the start-up instruction or a start-up abnormality, and outputting preprocessed information to a large language model; S3: generating, by the large language model, an execution strategy according to the preprocessed information, and outputting an execution command; and S4: controlling the PV power station to execute the execution command, and completing start-up of the PV power station if the PV power station successfully executes the execution command; and alternatively, controlling the PV power station to execute the execution command, returning to the step S2 if the start-up abnormality occurs during execution of the execution command by the PV power station, and performing cyclic execution until the start-up of the PV power station is completed. This application solves the problem that the existing start-up method for PV power stations involves cumbersome steps and imposes high professional requirements on operators, failing to achieve smooth start-up and seriously compromising the user experience.

## Description

### TECHNICAL FIELD

The present disclosure relates to the technical field of photovoltaics (PV), and in particular to a start-up method and apparatus for a PV power station, a storage medium, and a device.

### BACKGROUND TECHNOLOGY

The PV power station refers to a power generation system that harnesses solar energy, including electronic components made of special materials, such as crystalline silicon panels and inverters, and is connected to and supplies power to the power grid.

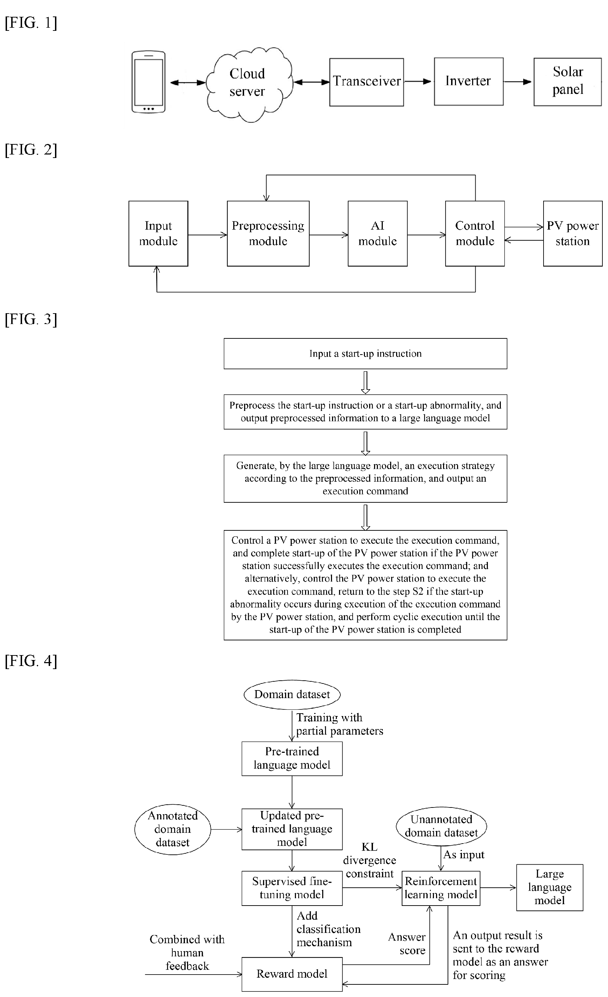

As shown in FIG. 1, the existing remote start-up method for PV power stations involves burdensome steps and imposes high professional requirements on operators. The conventional start-up method requires setting a large number of parameters, many of which are highly specialized and difficult for installers to understand, leading to a high risk of errors. There are numerous inherent constraints between these parameters, such as the range of set values and the impact of setting value A on value B. These constraints may result in a failure to achieve smooth start-up, thereby seriously compromising the user experience. With the continuous popularization and advancement of intelligence technologies, it is imperative to propose a simpler and more efficient solution to address the aforementioned problems.

### CONTENT OF THE INVENTION

An objective of the present disclosure is to provide a start-up method and apparatus for a PV power station, a storage medium, and a device to solve the aforementioned problems existing in the prior art.

The present disclosure provides a start-up method for a PV power station, including: S1: inputting a start-up instruction for the PV power station; S2: preprocessing the start-up instruction or a start-up abnormality, and outputting preprocessed information to a large language model; S3: generating, by the large language model, an execution strategy according to the preprocessed information, and outputting an execution command; and S4: controlling the PV power station to execute the execution command, and completing start-up of the PV power station if the PV power station successfully executes the execution command; and alternatively, controlling the PV power station to execute the execution command, returning to the step S2 if the start-up abnormality occurs during execution of the execution command by the PV power station, and performing cyclic execution until the start-up of the PV power station is completed.

Preferably, the start-up instruction is input by a means including voice input, quick response (QR) code scanning input, and text input.

Preferably, the preprocessing the start-up instruction or a start-up abnormality, and outputting preprocessed information to a large language model further includes: acquiring a standard information set of the PV power station; and performing matching between information from the standard information set of the PV power station and the start-up instruction, and constructing the preprocessed information recognizable by the large language model.

Preferably, the preprocessed information is a preliminary execution strategy configured to resolve the start-up abnormality; when the start-up abnormality occurs, a user manually inputs a temporary instruction for modifying a start-up parameter, thereby performing parameter modification on the preliminary execution strategy; and the temporary instruction is processed by the large language model to generate the execution strategy for resolving the start-up abnormality.

Preferably, the start-up instruction is input by a means including voice input, QR code scanning input, and text input; and the temporary instruction is input by a means including voice input, QR code scanning input, and text input.

Preferably, the preprocessing the start-up instruction or a start-up abnormality, and outputting preprocessed information to a large language model further includes: acquiring a standard information set of the PV power station; and performing matching between information from the standard information set of the PV power station and information of the start-up abnormality, and constructing the preprocessed information recognizable by the large language model.

Preferably, the generating, by the large language model, an execution strategy according to the preprocessed information, and outputting an execution command further includes: generating a diagnostic command according to the start-up instruction or the start-up abnormality.

Preferably, the start-up method for a PV power station further includes: performing a diagnostic operation on the PV power station; if an abnormality is identified during the diagnostic operation, generating, by the large language model, a preliminary execution strategy for resolving the abnormality according to feedback of an abnormal condition; performing sequential cyclic processing through a recursive task model; and modifying and adjusting, by inputting a temporary instruction during the processing, the preliminary execution strategy until all abnormal conditions are resolved.

Preferably, the performing sequential cyclic processing through a recursive task model; and modifying and adjusting, by inputting a temporary instruction during the processing, the preliminary execution strategy until all the abnormal conditions are resolved includes: decomposing an execution action with a plurality of subtasks, and recursively and automatically executing, by a system, each of the subtasks.

Preferably, the start-up method for a PV power station further includes: feeding the start-up abnormality back to the client.

Preferably, the start-up method for a PV power station further includes: manually generating an execution strategy for resolving the start-up abnormality; and alternatively, manually setting a portion of parameters, and combining the large language model to jointly generate the execution strategy for resolving the start-up abnormality.

Preferably, the start-up method for a PV power station includes: creating, before the step S1, a virtual power station mapped to an actual power station, where the virtual power station includes a device name, a device connection relationship, a display interface, a dynamic effect, and a device panel.

Preferably, construction of the large language model includes a following training process:
acquiring PV-related basic data and instruction data, constructing a domain dataset, and performing data annotation on the domain dataset to acquire an annotated domain dataset;
training a pre-trained language model through the domain dataset to update the pre-trained language model, and training the updated pre-trained language model through the annotated domain dataset to obtain a supervised fine-tuning model;
adding a classification mechanism to the supervised fine-tuning model; scoring and ranking, according to human feedback, an output from the supervised fine-tuning model with the classification mechanism added; and obtaining a reward model with a scoring mechanism;
taking the domain dataset as an input to train a reinforcement learning model, sending an obtained output result to the reward model for scoring, and feeding an obtained answer score back to the reinforcement learning model to adjust and reinforce the reinforcement learning model; and
taking the adjusted and reinforced reinforcement learning model as the large language model.

Preferably, the start-up method for a PV power station includes: freezing, when training the pre-trained language model through the domain dataset, a portion of parameter layers of the pre-trained language model, such that during training, the domain dataset performs parameter updating only on another portion of the parameter layers of the pre-trained language model.

Preferably, the start-up method for a PV power station includes: updating, when training the updated pre-trained language model through the annotated domain dataset, model data through a backpropagation algorithm, and obtaining the supervised fine-tuning model.

Preferably, the start-up method for a PV power station includes: adding, when adjusting and reinforcing the reinforcement learning model, a Kullback-Leibler (KL) divergence constraint with respect to the supervised fine-tuning model to a loss function of the reinforcement learning model to prevent overfitting of the reinforcement learning model.

Preferably, the PV-related basic data includes one or more of a user manual for the PV power station, frequently asked questions and answers (Q & A), a technical document, an online source, and user feedback information; and the instruction data is acquired by parsing a system instruction set and an interface parameter of the PV power station.

The present disclosure provides a start-up apparatus for a PV power station, including: an input module, configured to acquire input information from a client; a preprocessing module, configured to preprocess a start-up instruction or a start-up abnormality and output preprocessed information to a large language model; an artificial intelligence (AI) module, embedded with the large language model, where the large language model is configured to generate an execution strategy according to the preprocessed information and output an execution command; and a control and execution module, configured to control the PV power station to execute the execution command output by the AI module and feed an execution result back.

Preferably, the input information is the start-up instruction or a temporary instruction; the execution result is start-up completion or the start-up abnormality; when the start-up abnormality occurs, a user manually inputs the temporary instruction for modifying a start-up parameter; and the temporary instruction is processed by the large language model to generate the execution strategy for resolving the start-up abnormality.

Preferably, the preprocessing module includes: a storage unit, configured to store a standard information set of the PV power station; and an information matching unit, configured to perform matching between the pre-stored standard information set of the PV power station and information received by the preprocessing module and construct the preprocessed information recognizable by the large language model.

Preferably, the control and execution module includes a diagnostic unit configured to perform a diagnostic operation on the PV power station and feed a diagnostic result back.

The present disclosure provides a computer-readable storage medium, where the computer-readable storage medium is configured to store a computer program; and the computer program is configured to run to implement any one of the above-described start-up method for a PV power station.

The present disclosure provides an electronic device, including: a memory and a processor, where the memory is configured to store a computer program; and the processor is configured to run the computer program to implement any one of the above-described start-up method for a PV power station.

Beneficial Effects: In the embodiment of the present disclosure, a human-computer interaction method is adopted. The input information from the client is acquired, and preprocessed through an input preprocessor. The preprocessed information is sent to the AI module. The large language model performs automatic analysis and generates the start-up execution strategy. Thus, the present disclosure intelligently solves various problems encountered during the start-up process of the PV power station, and achieves the technical effects of convenient, efficient, and intelligent start-up. Consequently, the present disclosure solves the technical problem that the existing start-up method for PV power stations involves cumbersome steps and imposes high professional requirements on operators, failing to achieve smooth start-up and seriously compromising the user experience.

### DESCRIPTION OF THE DRAWINGS

FIG. 1 is a schematic diagram of existing remote control for a PV power station;
FIG. 2 is a schematic diagram of a start-up apparatus for a PV power station according to the present disclosure;
FIG. 3 is a flowchart of a start-up method for a PV power station according to the present disclosure;
FIG. 4 is a flowchart of constructing a large language model according to the present disclosure;
FIG. 5 is a comparative diagram of graphics card memory usage between a conventional training method and a method using zero redundancy optimizer (ZeRO) memory optimization technology; and
FIG. 6 is a schematic diagram of a workflow of a start-up method for a PV power station according to an embodiment of the present disclosure.

### SPECIFIC IMPLEMENTATIONS

To enable those skilled in the art to better understand the solutions of the present disclosure, the technical solutions in the embodiments of the present disclosure will be clearly and completely described below in conjunction with the drawings in the embodiments of the present disclosure. Obviously, the described embodiments are only a part of, not all of, the embodiments of the present disclosure. All other embodiments obtained by those of ordinary skill in the art based on the embodiments of the present disclosure without creative efforts should fall within the protection scope of the present disclosure.

It should be noted that the terms "first", "second", and so on in the description and claims of the present disclosure and in the above drawings are intended to distinguish between similar objects but do not necessarily indicate a specific order or sequence. It should be understood that the data termed in such a way is interchangeable in proper circumstances such that the embodiments of the present disclosure described herein can be implemented in other orders than the order illustrated or described herein. Moreover, the terms "include", "have", and any other variants mean to cover the non-exclusive inclusion, for example, a process, method, system, product, or device that includes a list of steps or units is not necessarily limited to those steps or units which are clearly listed, but may include other steps or units which are not expressly listed or inherent to such a process, method, system, product, or device.

In addition, the terms "mounted", "disposed", "provided with", "connected to", "connected with", and "sleeved" should be construed in a broad sense. For example, "connection" may be fixed connection, removable connection, or integration; may be mechanical connection or electrical connection; may be direct connection or indirect connection via an intermediate medium; or may be intercommunication between two components, elements or components. Those of ordinary skill in the art may understand specific meanings of the above terms in the present disclosure based on a specific situation.

It should be noted that the embodiments in the present disclosure and features in the embodiments may be combined with each other in a non-conflicting situation. The present disclosure will be described in detail below with reference to the drawings and embodiments.

To achieve the above objective, the present disclosure provides a start-up apparatus for a PV power station. As shown in FIG. 2, the start-up apparatus for a PV power station includes: an input module, a preprocessing module, an AI module, and a control and execution module. The input module is configured to acquire input information from a client. The input module may be various terminal devices such as a user's mobile phone or computer. The input module is connected to the preprocessing module. The preprocessing module receives the information input from the input module, performs preprocessing, and outputs preprocessed information to the AI module. The AI module is embedded with a large language model. The large language model generates an execution strategy according to the preprocessed information and outputs an execution command. The control and execution module is configured to control the PV power station to execute the execution command output by the AI module and feed an execution result back.

Preferably, the execution result is start-up completion or the start-up abnormality; when the start-up abnormality occurs, a user manually inputs the temporary instruction for modifying a start-up parameter; and the temporary instruction is processed by the large language model to generate the execution strategy for resolving the start-up abnormality.

In the present disclosure, the large language model is obtained by training through PV field-related data, which improves the model's ability to understand and apply professional knowledge in the PV field. The optimized large language model is accurately and effectively embedded into the PV start-up process to achieve intelligent interaction between the user and the system and provide intelligent problem identification and resolution functions. Thus, the user can raise questions or give instructions in natural language, and the system can accurately understand them and provide corresponding answers or operational suggestions.

The power station start-up method of the present disclosure can be applied to all aspects of the PV start-up process. These aspects include equipment fault diagnosis, user inquiry and response, data monitoring and analysis, etc. The combination of the large language model with the PV start-up process enables the rapid application and promotion of intelligent technology in the PV field. This provides strong support for the intelligent development of the PV field.

In an implementation, as shown in FIG. 4, construction of the large language model includes a following training process.

PV-related basic data and instruction data are acquired, a domain dataset is constructed, and data annotation is performed on the domain dataset to acquire an annotated domain dataset.

A pre-trained language model is trained through the domain dataset to update the pre-trained language model, and the updated pre-trained language model is trained through the annotated domain dataset to obtain a supervised fine-tuning model.

A classification mechanism is added to the supervised fine-tuning model; according to human feedback, an output from the supervised fine-tuning model with the classification mechanism added is scored and ranked; and a reward model with a scoring mechanism is obtained.

The domain dataset is taken as an input to train a reinforcement learning model, an obtained output result is sent to the reward model for scoring, and an obtained answer score is fed back to the reinforcement learning model to adjust and reinforce the reinforcement learning model.

The adjusted and reinforced reinforcement learning model is taken as the large language model.

In this embodiment, the construction of the domain dataset, namely data preparation, includes data acquisition, data cleaning, data annotation, data processing, and dataset division. Specifically:

Data acquisition: First, sources for data acquisition are determined. The PV-related basic data may include, but are not limited to, a user manual for the PV system, frequently asked Q & A, a technical document, an online source (such as forum posts; general domain knowledge and more real-time and specific Q & A can be acquired from professional websites, forums, social media, and other channels related to PV systems), and user feedback information. The instruction data is acquired by parsing a system instruction set and an interface parameter of a specific PV power station.

Taking the construction of the basic data using frequently asked Q & A as an example, for instance, the corresponding question input in natural language serves as Content, and the corresponding answer serves as Target. The following are examples of some Content and corresponding Target:

| Content | Target |
|---|---|
| "content": "How the batteries are stored once they arrive at the warehouse?" | "target": "If the equipment is not to be installed or used immediately, the storage environment needs to meet the following conditions a. Storage SOC: 20%~50%SOC. Charge and discharge the battery every 3 months. b. Storage temperature: -25°C~35°C(less than 6 months) or 35°C~60°C(less than 1 month) c. Storage humidity: 5%RH~95%RH(no condensation). Do not install the battery if any moist or condensation is found. d. Place the equipment in a cool place where away from direct sunlight and rain e. Keep the equipment away from flammable, explosive, and corrosive matters" |
| "content": "How many inverter packages can fit in a 40' container?" | "target": "414 packages of inverter can fit in a 40' container." |
| "content": "How many battery pack packages can fit in a pallet?" | "target": "For one pallet, there are 6 battery pack packages can be stacked on it." |

Taking the system instruction set and the interface parameter of the PV power station as an example, the corresponding system instruction input in natural language serves as Content, and the corresponding interface parameter serves as Target. The following are examples of some Content and corresponding Target:

| Content | Target |
|---|---|
| "content": "Set the maximum Internet power to 10 kW" | "target": "{function: device control, target: SigenStor, param: 10, unit: kW}" |
| "content": "Set energy saving mode" | "target": "{function: device control, target: Sigen station, param: Na, unit: Na}" |

Data cleaning: As the acquired basic data may include a large amount of noise and invalid information, data cleaning and preprocessing are required. Data cleaning includes steps such as removal of duplicate data, correction of erroneous information, and filtering of irrelevant information to ensure data quality and accuracy.

Data annotation: After data cleaning, the cleaned data needs to be annotated such that the model can accurately understand the meaning and relationships of the data during training. Data annotation work may include pairing Q & A, classifying and labeling instruction data, etc. This ensures that the annotated domain dataset can provide effective supervisory signals for the model.

Data processing: According to the specific training needs of each model, further processing and transformation of the data may also be required. The further processing and transformation include operations such as tokenization, vectorization, and serialization of text data to facilitate model input and processing.

Dataset division: Finally, the domain dataset needs to be divided into a training set, a validation set, and a test set. The annotated domain dataset also needs to be divided into a training set, a validation set, and a test set for model training, evaluation, and testing. Typically, the training set is used for model training, the validation set is used for adjusting model hyperparameters and structure, and the test set is used for final evaluation of model performance and generalization ability.

Through the above steps, data related to PV system Q & A or instructions can be effectively prepared, laying a reliable foundation for subsequent model training and implementation.

Preferably, when the pre-trained language model is trained through the domain dataset, a portion of parameter layers of the pre-trained language model is frozen, such that during training, the domain dataset performs parameter updating only on another portion of the parameter layers of the pre-trained language model. Then, when the updated pre-trained language model is trained through the annotated domain dataset, model data is updated through a backpropagation algorithm to obtain the supervised fine-tuning model.

When the reinforcement learning model is adjusted and reinforced, a KL divergence constraint with respect to the supervised fine-tuning model is added to a loss function of the reinforcement learning model to prevent overfitting of the reinforcement learning model.

During the training process of the large language model, each graphics card is primarily occupied by two types of content: one is model state data, and the other is other data. The model state data includes model parameters (fp16), model gradients (fp16), and Adam states (fp32 momentum and fp32 variance), while the rest of the data includes activations, temporary buffers, and graphics processing unit (GPU) memory fragments. Among the model state parameters, optimizer state parameters account for the largest proportion. For storage optimization of model states, zero redundancy optimizer (ZeRO) technology is adopted, which splits the model parameters into a plurality of shards such that each worker node only needs to store a portion of the parameters. Specifically, the optimizer states are divided into 1/N parts and distributed across N graphics cards. During forward propagation and backpropagation, the optimizer is not required, and only gradients are needed. At this stage, gradients from other parts are concatenated to form complete gradients for backpropagation. After the completion of forward propagation and backpropagation, the optimizer is then invoked for parameter updating. At this point, optimizer parameters and complete gradients from a plurality of cards are aggregated to perform parameter updating.

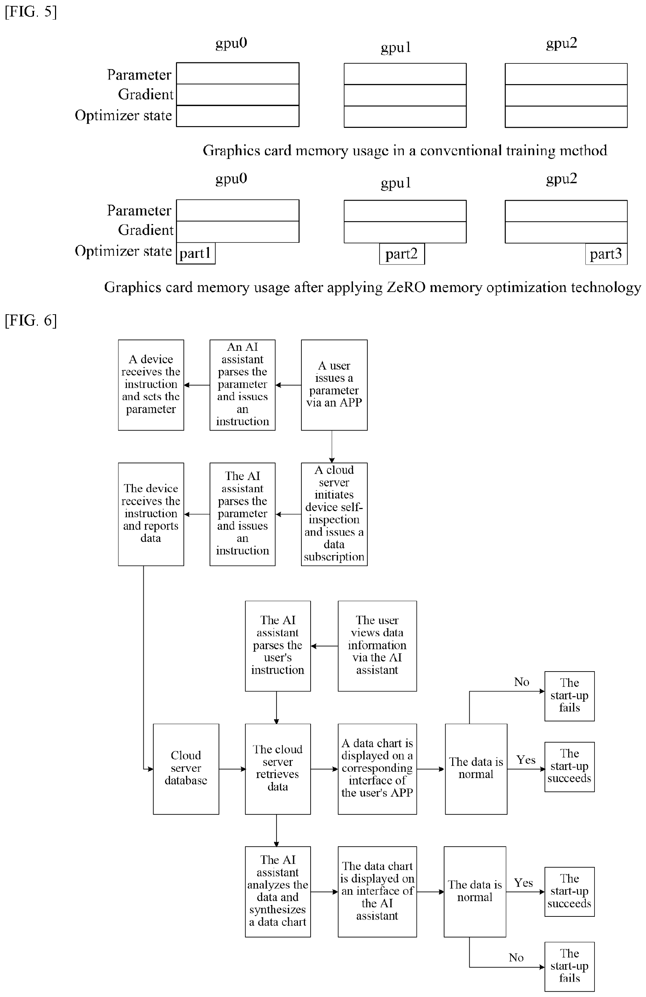

FIG. 5 is a comparative diagram of graphics card memory usage between a conventional training method and the method using ZeRO memory optimization technology. Generally, under conventional data parallel processing, each process uses identical parameters for training and also holds a complete copy of the optimizer states, which also consumes a large amount of memory (1 float16=2 bytes, 1 float32=4 bytes). In a mixed-precision scenario, taking a model with parameter count of Ψ and the Adam optimizer as an example, the Adam optimizer needs to store: backups of parameters and gradients in float16 precision, each occupying 2Ψ bytes of memory; and backups of parameters, momentum, and variance in float32 precision, corresponding to 3 copies of 4Ψ memory usage. Ultimately, a total of 2Ψ+2Ψ+3*4Ψ=16Ψ bytes of memory is required. By using the ZeRO-1 technology, this memory usage can be reduced to (2Ψ+2Ψ+3*4Ψ/n) bytes. For example, when n=3, only 8Ψ bytes of memory are needed. In addition, to improve training efficiency and resolve the issue of floating-point underflow, mixed-precision training is employed. During training, gradients, parameters, and data used in forward propagation and backpropagation are all in float16 format, while the optimizer retains a copy of parameters in float32 format. During parameter updating, the updated results are saved as float32 parameters, which are then converted to float16 format for forward propagation and backpropagation.

The user can wake up the application (APP) via the input module of the client to enter the system configuration state. Available wake-up methods include, but are not limited to: voice input, QR code scanning input, and text input. Voice input refers to the user entering natural language instructions such as "Start-up, start-up, or start-up". The APP acquires keywords from these specific natural language instructions in real time to achieve accurate and efficient APP wake-up.

Specifically, the user activates the built-in AI assistant function of the APP through voice wake-up. The AI assistant responds with a voice broadcast, for example, "Welcome to use the AI assistant". The user-installer interacts with the AI assistant via voice, saying "I want to start up the station" or "Start up the station", thereby triggering the system initialization state.

The preprocessing module includes a storage unit configured to store a standard information set of the PV power station. The standard information set of the PV power station includes user information, a PV power station document, product descriptions, and technical data of the PV industry, etc. The preprocessing module further includes an information matching unit configured to perform matching between the pre-stored standard information set of the PV power station and information received by the preprocessing module and construct preprocessed information recognizable by the large language model.

As shown in FIG. 6, the AI assistant acquires voice input information, and a built-in context model of the APP performs matching, verification, or correction on the input natural language against the content of the standard information set of the PV power station in a preset PV database. This yields more accurate information, thereby improving the precision of subsequent model processing. Meanwhile, an input preprocessor is employed to integrate the user input with the system context and perform a series of processing operations, generating more accurate and concise user input information. The information received by the preprocessing module is then matched against the pre-stored standard information set of the PV power station to construct preprocessed information recognizable by the large language model, which is subsequently sent to the large language model for data processing. The large language model includes but is not limited to ChatGPT. It can also be other models such as Alibaba Cloud's Tongyi Qianwen (Qwen) large language model and Huawei's Pangu AI large model. Based on the preprocessed information, the large language model can automatically generate an execution strategy and output an execution command.

The control and execution module is connected to an application programming interface (API) of a terminal, a cloud platform, or an on-site management device. It controls the PV power station to execute the execution command output by the AI module and feeds back an execution result. The control and execution module includes a series of components such as PV inverters. The control and execution module controls the PV power station to execute the execution command. If the PV power station successfully executes the execution command, the start-up is completed. Preferably, the control and execution module further includes a diagnostic unit configured to perform a diagnostic operation on the PV power station and feed a diagnostic result back.

In the start-up apparatus for a PV power station of the present disclosure, during the start-up process, the user provides information to the AI assistant through natural language. The AI assistant feeds the input information back to the data processing model. The large language model generates a start-up strategy and outputs a start-up execution command. This adopts a human-computer interaction method using a natural language input device, eliminating the need to manually input various parameters following the complicated start-up process. The APP intelligently and automatically completes each step of the start-up process, which simplifies the remote start-up process and greatly improves start-up efficiency and user experience.

Another embodiment of the present disclosure provides a start-up method for a PV power station, include following steps.

S1. A start-up instruction for the PV power station is input. The user can choose voice input, QR code scanning input, and text input. Specifically, the user activates the built-in AI assistant function of the APP through voice wake-up. The AI assistant responds with a voice broadcast, for example, "Welcome to use the AI assistant". The user-installer interacts with the AI assistant via voice, saying "I want to start up the station" or "Start up the station", thereby triggering the system initialization state.

S2. The start-up instruction or a start-up abnormality is preprocessed, and preprocessed information is output to a large language model.

The start-up instruction information input by the user is preprocessed through the preprocessing module. The AI assistant acquires voice input information, and a built-in context model of the APP performs matching, verification, or correction on the input natural language against the content of in a preset PV database. This yields more accurate information, thereby improving the precision of subsequent model processing. Meanwhile, an input preprocessor is employed to integrate the user input with the system context and perform a series of processing operations, generating more accurate and concise user input information. The preprocessed information is sent to the large language model. The large language model includes but is not limited to ChatGPT. It can also be other models such as Alibaba Cloud's Tongyi Qianwen (Qwen) large language model and Huawei's Pangu AI large model.

According to the embodiment of the present disclosure, preferably, the step that the input information is preprocessed through the input preprocessor and the preprocessed information is sent to the large language model is implemented as follows. A standard information set of the PV power station is acquired, and matching is performed on information from the standard information set of the PV power station and the start-up instruction to construct the preprocessed information recognizable by the large language model.

S3. The large language model generates an execution strategy according to the preprocessed information, and outputs an execution command.

The large language model ChatGPT generates the start-up execution strategy according to the preprocessed information (i.e. parameters such as maximum power point), converts the execution strategy into executable tasks for the PV power station, including start-up steps, parameter debugging, and value setting, and outputs the execution command.

S4. The PV power station is controlled to execute the execution command, and start-up of the PV power station is completed if the PV power station successfully executes the execution command. Alternatively, the PV power station is controlled to execute the execution command, this step returns to the step S2 if the start-up abnormality occurs during execution of the execution command by the PV power station, and cyclic execution is performed until the start-up of the PV power station is completed.

When the start-up abnormality occurs, a user manually inputs a temporary instruction for modifying a start-up parameter, and the temporary instruction is processed by the large language model to generate the execution strategy for resolving the start-up abnormality. The temporary instruction is input by a means including voice input, QR code scanning input, and text input.

The control and execution module receives the execution command output by the AI module and controls the PV power station to execute the execution command. If the PV power station successfully executes the execution command, the start-up is completed. The control and execution module can feed start-up completion information back to the client.

Upon receiving the execution command output by the AI module, the control and execution module controls the PV power station to execute the execution command. If a start-up abnormality occurs during the execution of the execution command by the PV power station, such as network disconnection, insufficient voltage, or system upgrade, the control and execution module feeds the encountered technical issue back to the preprocessing module. The preprocessing module retrieves the standard information set of the PV power station, performs matching between the information from the standard information set of the PV power station and the information of the start-up abnormality, and constructs preprocessed information recognizable by the large language model to form a preliminary execution strategy. Based on the preprocessed information (e.g. network disconnection data), the large language model ChatGPT generates a strategy for resolving the network disconnection, converts the request for reconnection attempts into executable tasks for the PV power station (including action procedures and parameter settings), and outputs an execution command. The control and execution module initiates network reconnection settings according to the network connection execution command to resolve the disconnection issue. After the network disconnection issue is fixed, the system automatically resumes the start-up process until start-up is completed. During the troubleshooting of the start-up abnormality, the preliminary execution strategy may require further adjustment, which can be implemented by manually inputting the temporary instruction. The large language model can capture keywords from the temporary instruction to complete the modification. The user manually inputs the temporary instruction to adjust the parameters of the preliminary execution strategy, generating a final execution strategy for resolving the start-up abnormality.

The volt-ampere characteristic of the PV power station lies between that of a voltage source and a current source, making it a highly unstable new energy source whose output power is highly sensitive to environmental conditions and load variations. Currently, conventional PV power station start-up relies on repeated on-off attempts by the PV inverter. The PV inverter can only operate normally when the output power of the PV array meets the minimum operating power requirement. The large language model can generate a diagnostic command based on the start-up instruction or the start-up abnormality to perform a diagnostic operation on the PV power station. If an abnormality is identified during the diagnostic operation, the large language model generates a corresponding execution strategy based on the feedback of the abnormal condition. The execution strategy is processed sequentially and cyclically via a recursive task model until all abnormal conditions are resolved. In this embodiment, the sequential and cyclical processing of the recursive task model until all the abnormal conditions are resolved is defined as follows. For an execution action with a plurality of subtasks, the execution action is decomposed, and the system recursively executes each subtask automatically.

In another embodiment of the start-up method for a PV power station of the present disclosure, the start-up abnormality can also be fed back to the client. The user can choose to manually generate an execution strategy to resolve the start-up abnormality. Alternatively, the user can manually set some parameters and combine the large language model to jointly generate an execution strategy to resolve the start-up abnormality.

The start-up method for a PV power station of the present disclosure can also create a virtual power station mapped to the actual power station before the user inputs the start-up instruction. The virtual power station includes a device name, a device connection relationship, a display interface, a dynamic effect, and a device panel. This completes the full interface display for the PV power station start-up, facilitating subsequent convenient operations. It allows the user to view the PV power station start-up progress and resolve encountered situations in real time.

Based on the above description, the present disclosure achieves the following technical effects.

In the embodiment of the present disclosure, a human-computer interaction method is adopted. The input information from the client is acquired, and preprocessed through the input preprocessor. The preprocessed information is sent to the AI module. The large language model performs automatic analysis and generates the start-up execution strategy. Thus, the present disclosure intelligently solves various problems encountered during the start-up process of the PV power station, and achieves the technical effects of convenient, efficient, and intelligent start-up. Consequently, the present disclosure solves the technical problem that the existing start-up method for PV power stations involves cumbersome steps and imposes high professional requirements on operators, failing to achieve smooth start-up and seriously compromising the user experience.

An embodiment of the present disclosure further provides a computer-readable storage medium. The computer-readable storage medium is configured to store a computer program. The computer program is configured to run to implement the start-up method for a PV power station.

In the computer-readable storage medium:
If implemented in form of a software functional unit and sold or used as a stand-alone product, the module integrated in the terminal device may be stored in a computer-readable storage medium. Based on such understanding, the present disclosure can also implement all or part of the processes in the method of the above embodiments by instructing relevant hardware through a computer program. The computer program may be stored in a computer-readable storage medium and, when executed by a processor, may implement each step of displaying and processing memory power consumption optimization.

The computer program may include a computer program code, and the computer program code may be in form of source code, object code, executable file, or in some intermediate forms, etc. The computer-readable medium may include: any physical entity or apparatus capable of carrying computer program code, a recording medium, a universal serial bus (USB) disc, a mobile hard disc drive, a magnetic disc, an optical disc, a computer memory, a read-only memory (ROM), a random access memory (RAM), an electrical carrier signal, a telecommunications signal, a software distribution medium, etc. It should be noted that the content included in computer-readable medium may be appropriately added or reduced according to legislative and patent practice requirements within a jurisdiction. For example, in some jurisdictions, based on legislation and patent practice, the computer-readable medium does not include electrical carrier signals or telecommunication signals.

An embodiment of the present disclosure further provides an electronic device, configured to store the start-up method for a PV power station. The electronic device includes a memory and a processor. The memory is configured to store a computer program. The processor is configured to run the computer program to implement the start-up method for a PV power station.

Evidently, those skilled in the art should understand that each module or step of the present disclosure described above may be implemented by a general-purpose computing apparatus. They may be centralized on a single computing apparatus or distributed across a network composed of multiple computing apparatuses. Alternatively, they may be implemented using program code executable by a computing apparatus, thereby allowing them to be stored in a storage apparatus for execution by the computing apparatus. Alternatively, they may be fabricated into individual integrated circuit modules, or a plurality of modules or steps may be fabricated into a single integrated circuit module for implementation. Therefore, the present disclosure is not limited to any specific hardware and software combination.

The preferred implementations of the present disclosure are described above in detail with reference to the drawings, but the present disclosure is not limited to the specific details in the above implementations. Various equivalent variations can be made to the technical solutions of the present disclosure without departing from the technical ideas of the present disclosure, but such equivalent variations should fall within the protection scope of the present disclosure.

## Claims

1. A start-up method for a photovoltaic (PV) power station, comprising:
S1: inputting a start-up instruction for the PV power station;
S2: preprocessing the start-up instruction or a start-up abnormality, and outputting preprocessed information to a large language model;
S3: generating, by the large language model, an execution strategy according to the preprocessed information, and outputting an execution command; and
S4: controlling the PV power station to execute the execution command, and completing start-up of the PV power station if the PV power station successfully executes the execution command; and alternatively, controlling the PV power station to execute the execution command, returning to the step S2 if the start-up abnormality occurs during execution of the execution command by the PV power station, and performing cyclic execution until the start-up of the PV power station is completed.

2. The start-up method for a PV power station according to claim 1, wherein the preprocessing the start-up instruction or a start-up abnormality, and outputting preprocessed information to a large language model further comprises:
acquiring a standard information set of the PV power station; and
performing matching between information from the standard information set of the PV power station and the start-up instruction, and constructing the preprocessed information recognizable by the large language model.

3. The start-up method for a PV power station according to claim 1, wherein the preprocessing the start-up instruction or a start-up abnormality, and outputting preprocessed information to a large language model further comprises:
acquiring a standard information set of the PV power station; and
performing matching between information from the standard information set of the PV power station and information of the start-up abnormality, and constructing the preprocessed information recognizable by the large language model.

4. The start-up method for a PV power station according to claim 3, wherein the preprocessed information is a preliminary execution strategy configured to resolve the start-up abnormality; when the start-up abnormality occurs, a user manually inputs a temporary instruction for modifying a start-up parameter, thereby performing parameter modification on the preliminary execution strategy; and the temporary instruction is processed by the large language model to generate an execution strategy for resolving the start-up abnormality.

5. The start-up method for a PV power station according to claim 1, wherein the start-up instruction is input by a means comprising voice input, quick response (QR) code scanning input, and text input; and the temporary instruction is input by a means comprising voice input, QR code scanning input, and text input.

6. The start-up method for a PV power station according to claim 1, wherein the generating, by the large language model, an execution strategy according to the preprocessed information, and outputting an execution command further comprises: generating a diagnostic command according to the start-up instruction or the start-up abnormality.

7. The start-up method for a PV power station according to claim 6, further comprising: performing a diagnostic operation on the PV power station; if an abnormality is identified during the diagnostic operation, generating, by the large language model, a preliminary execution strategy for resolving the abnormality according to feedback of an abnormal condition; performing sequential cyclic processing through a recursive task model; and modifying and adjusting, by inputting a temporary instruction during the processing, the preliminary execution strategy until all abnormal conditions are resolved.

8. The start-up method for a PV power station according to claim 7, wherein the performing sequential cyclic processing through a recursive task model; and modifying and adjusting, by inputting a temporary instruction during the processing, the preliminary execution strategy until all the abnormal conditions are resolved comprises:
decomposing an execution action with a plurality of subtasks, and recursively and automatically executing, by a system, each of the subtasks.

9. The start-up method for a PV power station according to claim 1, comprising: creating, before the step S1, a virtual power station mapped to an actual power station, wherein the virtual power station comprises a device name, a device connection relationship, a display interface, a dynamic effect, and a device panel.

10. The start-up method for a PV power station according to claim 1, wherein construction of the large language model comprises a following training process:
acquiring PV-related basic data and instruction data, constructing a domain dataset, and performing data annotation on the domain dataset to acquire an annotated domain dataset;
training a pre-trained language model through the domain dataset to update the pre-trained language model, and training the updated pre-trained language model through the annotated domain dataset to obtain a supervised fine-tuning model;
adding a classification mechanism to the supervised fine-tuning model; scoring and ranking, according to human feedback, an output from the supervised fine-tuning model with the classification mechanism added; and obtaining a reward model with a scoring mechanism;
taking the domain dataset as an input to train a reinforcement learning model, sending an obtained output result to the reward model for scoring, and feeding an obtained answer score back to the reinforcement learning model to adjust and reinforce the reinforcement learning model; and
taking the adjusted and reinforced reinforcement learning model as the large language model.

11. The start-up method for a PV power station according to claim 10, comprising: freezing, when training the pre-trained language model through the domain dataset, a portion of parameter layers of the pre-trained language model, such that during training, the domain dataset performs parameter updating only on another portion of the parameter layers of the pre-trained language model.

12. The start-up method for a PV power station according to claim 10 or 11, comprising: updating, when training the updated pre-trained language model through the annotated domain dataset, model data through a backpropagation algorithm, and obtaining the supervised fine-tuning model.

13. The start-up method for a PV power station according to claim 10, comprising: adding, when adjusting and reinforcing the reinforcement learning model, a Kullback-Leibler (KL) divergence constraint with respect to the supervised fine-tuning model to a loss function of the reinforcement learning model to prevent overfitting of the reinforcement learning model.

14. The start-up method for a PV power station according to claim 10, wherein the PV-related basic data comprises one or more of a user manual for the PV power station, frequently asked questions and answers (Q & A), a technical document, an online source, and user feedback information; and the instruction data is acquired by parsing a system instruction set and an interface parameter of the PV power station.

15. A start-up apparatus for a PV power station, comprising:
an input module, configured to acquire input information from a client;
a preprocessing module, configured to preprocess a start-up instruction or a start-up abnormality and output preprocessed information to a large language model;
an artificial intelligence (AI) module, embedded with the large language model, wherein the large language model is configured to generate an execution strategy according to the preprocessed information and output an execution command; and
a control and execution module, configured to control the PV power station to execute the execution command output by the AI module and feed an execution result back.

16. The start-up apparatus for a PV power station according to claim 15, wherein the input information is the start-up instruction or a temporary instruction; the execution result is start-up completion or the start-up abnormality; when the start-up abnormality occurs, a user manually inputs the temporary instruction for modifying a start-up parameter; and the temporary instruction is processed by the large language model to generate the execution strategy for resolving the start-up abnormality.

17. The start-up apparatus for a PV power station according to claim 15, wherein the preprocessing module comprises:
a storage unit, configured to store a standard information set of the PV power station; and
an information matching unit, configured to perform matching between the pre-stored standard information set of the PV power station and information received by the preprocessing module and construct the preprocessed information recognizable by the large language model.

18. The start-up apparatus for a PV power station according to claim 15, wherein the control and execution module comprises a diagnostic unit configured to perform a diagnostic operation on the PV power station and feed a diagnostic result back.

19. A computer-readable storage medium, wherein the computer-readable storage medium is configured to store a computer program; and the computer program is configured to run to implement the start-up method for a PV power station according to any one of claims 1 to 15.

20. An electronic device, comprising: a memory and a processor, wherein the memory is configured to store a computer program; and the processor is configured to run the computer program to implement the start-up method for a PV power station according to any one of claims 1 to 15.
